# NEUE EUROPÄISCHE PATENTSCHRIFT

(11) **EP 2 415 202 B2**
(45) Veröffentlichungstag und Bekanntmachung des Hinweises auf die Entscheidung über den Einspruch: **16.11.2016**
(45) Hinweis auf die Patenterteilung: 17.07.2013
(21) Anmeldenummer: 10710249.3
(22) Anmeldetag: 22.03.2010
(51) Int. Cl.: H04L 12/12, H04L 12/40

(54) **STEUERGERÄT FÜR EIN FAHRZEUGNETZWERK UND VERFAHREN ZUM BETREIBEN EINES FAHRZEUGNETZWERKES**
CONTROL DEVICE FOR A VEHICLE NETWORK AND METHOD FOR OPERATING A VEHICLE NETWORK
BOÎTIER DE COMMANDE POUR UN RÉSEAU DE BORD DE VÉHICULE ET PROCÉDÉ POUR FAIRE FONCTIONNER UN RÉSEAU DE BORD DE VÉHICULE

(30) Priorität: 31.03.2009 DE 102009015197
(43) Veröffentlichungstag der Anmeldung: 08.02.2012
(73) Patentinhaber: Volkswagen Aktiengesellschaft, 38440 Wolfsburg (DE); Audi AG, 85045 Ingolstadt (DE)
(72) Erfinder: ROTT, Alexander, 93077 Bad Abbach (DE); SPEH, Jörg, 38114 Braunschweig (DE); SCHANZE, Carsten, 38448 Wolfsburg (DE)
(74) Vertreter: Patentanwälte Bressel und Partner mbB
(86) Internationale Anmeldenummer: PCT/EP2010/001895
(87) Internationale Veröffentlichungsnummer: WO 2010/112173

(56) Entgegenhaltungen:
- WO-A1-03/104959
- DE-A1- 10 358 584
- FR-A3- 2 917 555
- US-A1- 2007 079 161
- US-A1- 2007 230 484

## Beschreibung

Die Erfindung betrifft ein Steuergerät für ein Fahrzeugnetzwerk und ein Verfahren zum Betreiben eines Fahrzeugnetzwerkes.

Steuergeräte für ein Fahrzeugnetzwerk wie beispielsweise CAN, FlexRay oder LIN sind seit langem bekannt. Gemeinsam ist den Steuergeräten, dass diese einen Mikroprozessor und einen Transceiver aufweisen und geeignet an die entsprechenden Busleitungen angeschlossen sind. Durch Einschaltung eines Betriebssignals werden dabei sämtliche Steuergeräte eingeschaltet. Dieses Betriebssignal ist bei einem Kraftfahrzeug mit Verbrennungsmotor üblicherweise Klemme 15 (KL15), d.h. also die Einschaltung der Zündung. Des Weiteren sind Steuergeräte bekannt, die beim Ausschalten der Zündung in einen Sleep-Modus geschaltet werden, um bei einem bestimmten Signal aufzuwachen und gegebenenfalls weitere Steuergeräte aufzuwecken bzw. einzuschalten. Ein solches Steuergerät ist beispielsweise das Steuergerät für eine Zentralverriegelung. Ein Problem von modernen Kraftfahrzeugen ist der erhöhte elektrische Energiebedarf, der bei Fahrzeugen mit Verbrennungsmotoren auch einen erhöhten Kraftstoffverbrauch bewirkt.

Die FR 2 917 555 A1 offenbart ein Multiplex-Netzwerk in einem Kraftfahrzeug, welches zumindest eine Master-Einheit und Slave-Einheiten umfasst. Jede der Slave-Einheiten weist mindestens einen aufgeweckten und einen schlafenden Zustand auf. Die oder jede der Master-Einheiten ist fähig, einen Datenübertragungsblock über das Netzwerk zu senden, mittels derer die Slave-Einheiten aufgeweckt werden können.

Die WO 03/104959 A1 offenbart ein Verfahren zum Ansprechen und/oder Aktivieren mindestens eines Teilnehmers eines CAN-Busses, wobei im Falle mindestens einer auf dem Datenbus anstehenden Nachricht zunächst mindestens eine dem Teilnehmer zugeordnete Protokollkontrollereinheit mit Spannung versorgt wird. Weiter wird offenbart, dass die Protokollkontrollereinheit durch die eingehende Nachricht angesprochen werden kann, wobei die eingehende Nachricht mit mindestens einer in der Protokollkontrollereinheit gespeicherten, der Applikation zugeordneten Referenznachricht verglichen werden kann, wobei der Entsprechung und/oder Übereinstimmung von der eingehenden Nachricht und der Referenznachricht mindestens eine Rückmeldung an mindestens eine dem Teilnehmer vorgeschaltete Transceiver-Einheit ergeht und wobei die Applikation insbesondere mindestens eine dem Teilnehmer zugeordnete Applikationskontroller-Einheit, durch die Transceiver-Einheit aktiviert wird.

Die US 2007/230484 A1 offenbart ein Verfahren zur Speicherung einer Nachricht für einen Knoten in einem Multiplex-Kommunikationssystem. Hierbei wird eine eingehende Nachricht über einen Multiplex-Bus von einem Teilnehmer des Multiplex-Kommunikationsnetzwerkes empfangen, wobei weiter ein Signal als Antwort auf die eingehende Nachricht gesendet wird, welches einen Kontroller des Knotens in einen Wake-up-Modus versetzt. Weiter wird die eingehende Nachricht in einem Speicher des Knotens gespeichert, wobei die gespeicherte Nachricht an den Kontroller übertragen wird, wenn dieser den Wake-up-Modus erreicht hat.

Die DE 103 58 584 A1 offenbart eine Vorrichtung zum Aufwecken von Teilnehmern eines Bussystems, wobei ein Zähler vorgesehen ist, der wenigstens eine vorgegeben Signaleigenschaft der auf dem Bussystem übermittelten Signale erfasst und bei einem Erreichen einer vorgebbaren Anzahl einen weiteren Aufweckvorgang einleitet.

Die US 2007/079161 A1 offenbart ein Verfahren zur Datenverarbeitung in einem Computersystem, welches einen ersten und einen zweiten Prozessor aufweist. Das Verfahren umfasst das Instruieren des zweiten Prozessors zur Ausführung einer sich wiederholenden Operation bezüglich eines Datenstroms und ein Versetzen des ersten Prozessors in einen Energiesparmodus. Weiter umfasst das offenbarte Verfahren das wiederholte Ausführen der Operation bezüglich des Datenstromes durch den zweiten Prozessor während der erste Prozessor in dem Energiesparmodus verbleibt.

Der Erfindung liegt das technische Problem zugrunde, ein Steuergerät für ein Fahrzeugnetzwerk sowie ein Verfahren zum Betreiben eines Fahrzeugnetzwerkes zur Verfügung zu stellen, mittels derer der elektrische Energiebedarf reduziert wird.

Die Lösung des technischen Problems ergibt sich durch die Gegenstände mit den Merkmalen der Patentansprüche 1 und 6. Weitere vorteilhafte Ausgestaltungen der Erfindung ergeben sich aus den Unteransprüchen.

Hierzu umfasst das Steuergerät für ein Fahrzeugnetzwerk einen Mikroprozessor und einen Transceiver, wobei das Steuergerät bei einem vorab definierten Zustand während des Betriebes des Kraftfahrzeuges ausgeschaltet oder in einen Sleep-Modus schaltbar ist. Hierdurch können einzelne oder Gruppen von Steuergeräten auch während des Betriebes des Kraftfahrzeuges in einen energiesparenden Modus geschaltet werden. Das Betriebssignal ist dabei beispielsweise das Klemme-15-Signal oder ein Anlasssignal bei einem Elektrofahrzeug. In einer ersten Alternative umfasst also der Begriff Betrieb einen Zustand des Kraftfahrzeugs mit eingeschalteter Zündung. In einer zweiten Alternative kann der Begriff Betrieb zusätzlich einen Zustand des Kraftfahrzeugs mit ausgeschalteter Zündung umfassen.

Hierbei wird unter dem Begriff Zustand ein Fahrzustand oder Fahrzeugzustand des Kraftfahrzeugs verstanden. Solche Zustände können z.B. durch eine Auswertung von Sensorsignalen bestimmt werden.

Vorzugsweise werden alle Steuergeräte mit dem Betriebssignal zunächst eingeschaltet und anschließend gezielt abgeschaltet bzw. in den Sleep-Modus geschaltet. Alternativ kann vorgesehen sein, dass einzelne Steuergeräte beim Einschalten des Betriebssignals nicht eingeschaltet werden, sondern gleich in einen Sleep-Modus geschaltet werden und dann gezielt durch eine Netzwerk-Botschaft während des Betriebes aufgeweckt werden. Weiter kann vorgesehen sein, dass zunächst das Steuergerät mit dem Betriebssignal eingeschaltet wird, dann durch einen Zustand in den Sleep-Modus geschaltet wird und dann durch einen weiteren Zustand wieder aufgeweckt werden kann. In einem Netzwerk können dabei die einzelnen Alternativen auch kombiniert werden. Alle Maßnahmen führen zu einer Einsparung von elektrischer Energie.

Aufwecken bedeutet hierbei eine Aktivierung oder Einschaltung des Steuergeräts.

Dabei umfasst das Steuergerät ein Modul zur Netzwerk-Botschafts-Erkennung, das das Einschalten und/oder den Sleep-Modus und/oder das Ausschalten steuert. Dabei wird der Zustand zur Schaltung des Steuergeräts in den Sleep-Modus oder zum Ausschalten oder zum Aufwecken über eine Netzwerk-Botschaft übermittelt.

In einer Ausführungsform ist das Steuergerät bei einem vorab definierten Ereignis während des Betriebes des Kraftfahrzeuges ausschaltbar oder in einen Sleep-Modus schaltbar und/oder das Steuergerät bei einem vorab definierten Ereignis während des Betriebes aus dem Sleep-Modus aufweckbar.

In einer bevorzugten Ausführungsform ist das Ereignis zur Schaltung des Steuergerätes in den Sleep-Modus oder zum Ausschalten oder zum Aufwecken mindestens eine Netzwerk-Botschaft, die vorzugsweise von einem Master-Steuergerät gesendet wird. Alternativ wird der Zustand zur Schaltung des Steuergeräts in den Sleep-Modus oder zum Ausschalten oder zum Aufwecken über eine Netzwerk-Botschaft übermittelt.

Vorzugsweise ist das Modul eingangsseitig mit dem Ausgang eines Receivers des Transceivers verbunden und ausgangsseitig mit einer Steuerlogik für den Mikroprozessor und/oder dem Transceiver verbunden. Insbesondere ist das Modul ausgangsseitig mit einer Steuerlogik des Transceivers oder ausgangsseitig mit einer Steuerlogik und einen Treiber des Transceivers oder ausgangsseitig mit dem Mikroprozessor und einem Treiber des Transceivers verbunden ist.

Hierdurch kann entsprechend der Transceiver und/oder der Mikroprozessor ausgeschaltet bzw. in einen Energiesparmodus geschaltet werden. So kann beispielsweise in einem Sleep-Modus der Treiber zum Senden abgeschaltet werden und der Receiver in einen passiven Horch-Zustand geschaltet werden, der dann auf eine aufweckende Netzwerk-Botschaft wartet.

In einer weiteren bevorzugten Ausführungsform ist das Modul in dem Transceiver oder in dem Mikroprozessor integriert oder als separates Bauteil ausgebildet.

In einer weiteren Ausführungsform ist das Modul in den Mikroprozessor integriert. Hierbei ist mittels des Moduls eine Koprozessor-Funktion des Mikroprozessors ausführbar, falls ein Sleep-Modus des Mikroprozessors aktiviert ist. Hierbei führt das Modul in der Koprozessor-Funktion einen Sendebetrieb und/oder Empfangsbetrieb und/oder eine Auswertung von Empfangsbotschaften und/oder einen Betriebsmodewechsel durch.

In einer weiteren Ausführungsform umfasst das Modul mindestens eine Daten-Maske und/oder mindestens eine DLC-Maske und/oder mindestens eine Identifier-Maske.

In einer weiteren Ausführungsform umfasst das Modul mindestens eine Ein- und Ausgabeschnittstelle, wobei mittels der Ein- und Ausgabeschnittstelle externe Signale empfangbar und/oder sendbar sind.

In einer weiteren Ausführungsform umfasst das Modul mindestens eine Ausgangsschnittstelle zur Ausgabe von Signalen zu externen Spannungsreglern und/oder mindestens eine Ausgangsschnittstelle zur Ausgabe von Signalen zur Steuerung des Transceivers.

In einer weiteren Ausführungsform umfasst das Modul mindestens einen Time-Out-Timer, wobei mittels des Moduls ein Betriebsmode umschaltbar ist, falls der Time-Out-Timer einen vorbestimmten Wert oder 0 erreichen.

In einer weiteren Ausführungsform umfasst das Modul mindestens einen Zähler, wobei mittels des Moduls ein Betriebsmode umschaltbar ist, falls der Zähler einen vorbestimmten Wert erreicht.

In einer weiteren Ausführungsform umfasst das Modul mindestens einen Empfangsbuffer und/oder mindestens einen Sendebuffer, wobei mittels des Empfangsbuffers Botschaften empfangbar und/oder mittels des Sendebuffers Botschaften sendbar sind.

In einer weiteren bevorzugten Ausführungsform übermittelt ein Master-Steuergerät als Ereignis eine Netzwerk-Botschaft, in deren Abhängigkeit mindestens ein Steuergerät ein - oder ausgeschaltet oder in den Sleep-Modus geschaltet oder aufgeweckt wird.

In einer weiteren bevorzugten Ausführungsform ist der vorab definierte Zustand die Kraftfahrzeuggeschwindigkeit V, wobei bei V > 0 bzw. V > V_{grenz} mindestens ein Steuergerät ausgeschaltet oder in den Sleep-Modus geschaltet oder aufgeweckt wird. Ein weiterer Zustand kann beispielsweise eine Zeit t sein. So kann vorgesehen sein, dass nach einer vorgegebenen Zeit t₀ nach Einschaltung des Betriebssignals einzelne Steuergeräte abgeschaltet oder in den Sleep-Modus geschaltet werden.

Bei den Steuergeräten, die abgeschaltet werden bzw. in den Sleep-Modus geschaltet oder aufgeweckt werden, handelt es sich vorzugsweise um Komfortsteuergeräte wie beispielsweise ein Sitzverstellungs-Steuergerät, ein Standheizungs-Steuergerät oder ein Schiebedach-Steuergerät.

Die Erfindung wird nachfolgend anhand eines bevorzugten Ausführungsbeispieles näher erläutert. Die Fig. zeigen:
- Fig. 1: ein schematisches Blockschaltbild eines Fahrzeugnetzwerkes,
- Fig. 2a: ein schematisches Blockschaltbild eines Steuergerätes mit einem in einem Transceiver integrierten Modul zur Netzwerk-Botschafts-Erkennung,
- Fig. 2b: ein schematisches Blockschaltbild eines Steuergerätes mit einem in einem Mikroprozessor integrierten Modul zur Netzwerk-Botschafts-Erkennung,
- Fig. 2c: ein schematisches Blockschaltbild eines Steuergerätes mit einem separaten Modul zur Netzwerk-Botschafts-Erkennung,
- Fig. 3: ein detailliertes schematisches Blockschaltbild eines in einen Transceiver integrierten Moduls zur Netzwerk-Botschafts-Erkennung und
- Fig. 4: ein detailliertes schematisches Blockschaltbild eines in einem Mikroprozessor integrierten oder als separates Bauteil ausgeführten Moduls zur Netzwerk-Botschafts-Erkennung.

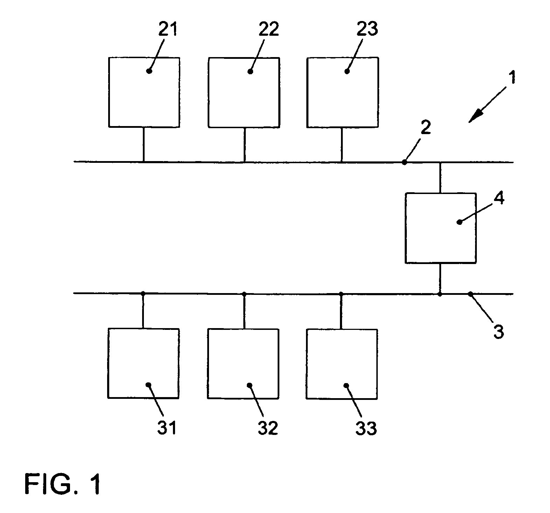

In der Fig. 1 ist schematisch ein Fahrzeugnetzwerk 1 dargestellt, das aus zwei Bussystemen 2, 3 besteht, die über ein Steuergerät 4 miteinander verbunden sind. Das Steuergerät 4 arbeitet dabei als Gateway zwischen den beiden Bussystemen 2, 3. Das Bussystem 2 umfasst die Steuergeräte 21-23 und das Bussystem 3 umfasst die Steuergeräte 31-33. Dabei sei angenommen, dass es sich bei dem Bussystem 3 um ein zeitkritisches System wie beispielsweise CAN-Highspeed und bei dem Bussystem 2 um ein zeitunkritisches System wie beispielsweise CAN-Lowspeed handelt, in dem insbesondere Komfortsteuergeräte angeordnet sind.

In einer ersten Ausführungsform werden mit Einschaltung der Zündung KL15 alle Steuergeräte 4, 21-23, 31-33 eingeschaltet. In Abhängigkeit eines vorab definierten Zustandes und/oder einer vorab definierten Netzwerk-Botschaft wird dann mindestens ein Steuergerät 21-23 ausgeschaltet oder in einen Sleep-Modus geschaltet. Der Unterschied zwischen ausgeschaltet und Sleep-Modus ist, dass ein ausgeschaltetes Steuergerät nicht nur nicht sendet, sondern auch keine Netzwerk-Botschaften mehr empfangen kann, also vollkommen aus der Netzwerkkommunikation entbunden ist. Im Sleep-Modus empfängt das schlafende Steuergerät 21-23 hingegen noch Netzwerk-Botschaften, wenn auch auf einem geringeren Leistungspegel. Mögliche vorab definierte Zustände sind die Fahrzeuggeschwindigkeit und/oder eine Zeitspanne und/oder weitere Fahr- oder Fahrzeugzustände. Dem liegt die Erkenntnis zugrunde, dass bei einer Fahrzeuggeschwindigkeit V > 0 üblicherweise bestimmte Funktionen nicht mehr ausgeführt werden. Beispielsweise wird während der Fahrt keine Sitzverstellung vorgenommen. Des Weiteren kann angenommen werden, dass nach einer gewissen Zeit nach Einschaltung der Zündung bestimmte Einstellungen nicht mehr geändert werden. Daher können bestimmte Steuergeräte in den Sleep-Modus bzw. sogar abgeschaltet werden, ohne dass es zu spürbaren Komforteinbußen käme, wobei jedoch die elektrische Leistungsaufnahme reduziert wird. Der Zustand Zeitdauer kann dabei intern durch das Steuergerät selbst ausgewertet werden, wobei der Zustand V > 0 vorzugsweise über eine Netzwerk-Botschaft mitgeteilt wird. In diesem Fall bedingt der Zustand (V > 0) ein Ereignis (Netzwerk-Botschaft).

Wird dann ein im Sleep-Modus befindliches Steuergerät 21-23 benötigt, so kann dies durch eine vorab definierte Netzwerk-Botschaft wieder aufgeweckt werden. Hierzu sendet beispielsweise ein Master-Steuergerät, im vorliegenden Fall vorzugsweise das Steuergerät 4, eine entsprechende Netzwerk-Botschaft an das schlafende Steuergerät 21-23. Dabei sei angemerkt, dass üblicherweise bei den Netzwerken keine direkte Zuordnung einer Netzwerk-Botschaft zu einem Steuergerät besteht, sondern das sendende Steuergerät die Netzwerk-Botschaft auf den Bus überträgt und alle Steuergeräte diese empfangen können, wobei dann das jeweilige Steuergerät prüft, ob die Netzwerk-Botschaft für den eigenen Betrieb relevant ist.

Alternativ kann vorgesehen sein, dass bestimmte Steuergeräte 21-23 erst gar nicht eingeschaltet werden, sondern mit dem Signal Klemme 15 vom ausgeschalteten Zustand in den Sleep-Modus geschaltet werden. Diese schlafenden Steuergeräte können dann analog durch eine Netzwerk-Botschaft aufgeweckt werden.

So wie ein im Sleep-Modus befindliches Steuergerät 21-23 durch eine Netzwerk-Botschaft aufgeweckt werden kann, so kann ein eingeschaltetes Steuergerät 21-23 durch eine Netzwerk-Botschaft auch in den Sleep-Modus geschaltet oder auch ausgeschaltet werden, was vorzugsweise ebenfalls durch ein Master-Steuergerät erfolgt.

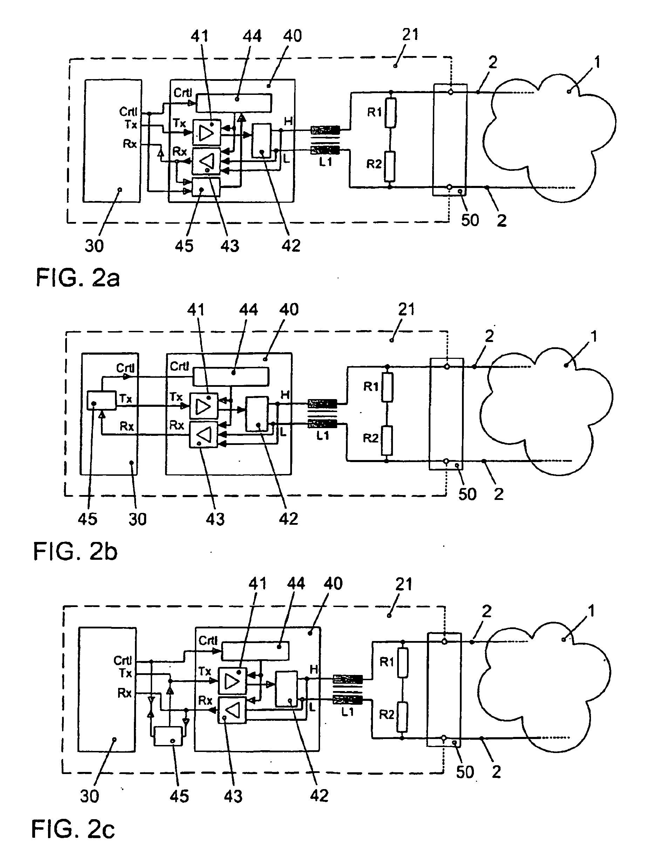

In den Fig. 2a-c sind verschiedene Ausführungsformen eines erfindungsgemäßen Steuergerätes 21 dargestellt, wobei die Ausführungen auch auf die Steuergeräte 22 und 23 übertragbar sind. Das Steuergerät 21 umfasst einen Mikroprozessor 30, einen Transceiver 40 und einen Steuergerätestecker 50, mittels dessen das Steuergerät 21 an das Bussystem 2 bzw. das Netzwerk 1 angeschlossen wird. Zwischen dem Steuergerätestecker 50 und dem Transceiver 40 sind Busabschlusswiderstände R1, R2 sowie eine induktive Gleichtaktunterdrückung L1 angeordnet. Der Transceiver 40 umfasst einen Treiber 41 mit nachgeschalteter Endstufe 42, einen Receiver 43 und eine Kontroll-Logik 44 bzw. Steuerlogik. Der Treiber 41 mit nachgeschalteter Endstufe 42 dient zum Senden von Netzwerk-Botschaften, die der Mikroprozessor 30 an seinem Ausgang Tx bereitstellt. Entsprechend dient der Receiver 43 zum Empfangen von Netzwerk-Botschaften, die dann an einen Rx-Eingang des Mikroprozessors 30 übermittelt werden. Die Kontroll-Logik 44 ist eingangsseitig mit einem Steuerausgang Crtl des Mikroprozessors 30 verbunden. Ausgangsseitig ist die Kontroll-Logik 44 mit Steuereingängen des Treibers 41 und des Receivers 43 verbunden. Über die Kontroll-Logik 44 können dann der Treiber 41 und der Receiver 43 in einen Betriebs-Modus oder einen Sleep-Modus geschaltet werden. Die vorgenannten Ausführungen gelten dabei für alle drei Ausführungsformen gemäß den Fig. 2a-c. Zusätzlich umfasst das Steuergerät 21 ein Modul 45 zur Netzwerk-Botschafts-Erkennung. Hierzu ist das Modul 45 eingangsseitig mit dem Ausgang des Receivers 43 und ausgangsseitig mit dem Mikroprozessor 30 (siehe Fig. 2a, Fig. 2c) und/oder einem Eingang der Kontroll-Logik 44 (siehe Fig. 2b, Fig. 2c) verbunden. In Abhängigkeit der erfassten Netzwerk-Botschaften erzeugt dann das Modul 45 ein Signal für den Mikroprozessor 30 und/oder die Kontroll-Logik 44, um den Mikroprozessor 30 oder den Treiber 41 bzw. Receiver 43 in einen Sleep-Modus oder einen Betriebsmodus zu schalten. Dabei ist in Fig. 2a das Modul 45 integrativer Bestandteil des Transceivers 40. Dabei ist in Fig. 2a dargestellt, dass der Ausgang des Moduls 45 mit einem eigenen Eingang der Kontroll-Logik 44 verbunden ist. Es ist auch möglich, den Ausgang auf den Eingang der Kontroll-Logik 44 zu schalten, der vom Mikroprozessor 30 angesteuert wird.

Das Modul 45 empfängt über den Receiver 43 Botschaften, wertet deren Identifier und Dateninhalt bitgenau aus und ermittelt die Anzahl der Datenbytes der Botschaften.

Es existieren verschiedene Kriterien gemäß derer das Modul ein Schaltsignal für eine Änderung eines Betriebsmodus erzeugen kann. Die Kriterien können hierbei alternativ oder kumulativ ausgewertet werden.

Gemäß einem ersten Kriterium vergleicht das Modul 45 den Identifier mit einer Maske. Bei Übereinstimmung von Identifier und Maske erzeugt das Modul 45 ein Signal für die Kontroll-Logik 44, um den Treiber 41 bzw. Receiver 43 in einen Sleep-Modus oder einen gewünschten Betriebsmode zu schalten.

Gemäß einem zweiten Kriterium vergleicht das Modul 45 den Dateninhalt bitweise mit einer Maske. Bei Übereinstimmung mindestens eines vorbestimmten bzw. vordefinierten Bits erzeugt das Modul 45 ein Signal für die Kontroll-Logik 44, um den Treiber 41 bzw. Receiver 43 in einen Sleep-Modus oder einen gewünschten Betriebsmode zu schalten.

Gemäß einem dritten Kriterium vergleicht das Modul 45 die Anzahl der Datenbytes mit einer Maske. Ist die Anzahl kleiner als die durch die Maske festgelegte Anzahl, erzeugt das Modul 45 ein Signal für die Kontroll-Logik 44, um den Treiber 41 bzw. Receiver 43 in einen Sleep-Modus oder einen gewünschten Betriebsmode zu schalten.

Ein Vergleich kann hierbei auch für eine Anzahl von Datenbits erfolgen.

Die Masken für Identifier, Dateninhalt und Anzahl der Datenbytes sind im Modul 45 fest hinterlegt oder können vom Mikroprozessor 30 mit dem Steuerausgang Crtl im Modul 45 frei konfiguriert werden. Hierbei ist in Fig. 2a dargestellt, dass der Steuerausgang Ctrl des Mikroprozessors 30 zusätzlich mit einem Eingang des Moduls 45 datentechnisch verbunden ist. Selbstverständlich ist auch vorstellbar, dass der Mikroprozessor über einen zusätzlichen Steuerausgang und eine zusätzliche Datenleitung mit dem Eingang des Moduls 45 datentechnisch verbunden werden kann.

Vorzugsweise ist eine Datenleitung zwischen dem Mikroprozessor 30 und dem Modul 45 bidirektional ausgebildet. Auch alle weiteren dargestellten Datenleitungen können bidirektional ausgebildet werden. Der Mikroprozessor 30 kann somit mittels des Steuerausgangs Crtl die Ursache der Betriebsmodeumschaltung des Transceivers 40 vom Modul 45 auslesen (Identifier, Dateninhalt, Verletzung der Botschaftslänge). Selbstverständlich ist auch vorstellbar, dass ein zusätzlicher Dateneingang des Mikroprozessors und eine zusätzliche Datenleitung zum Auslesen der Ursachen der Betriebsmodeumschaltung genutzt wird.

In Fig. 2b ist das Modul 45 integrativer Bestandteil des Mikroprozessors 30. Hierbei steuert das Modul 45 den Betriebsmodewechsel des Mikroprozessors 30 von einem Betriebs- oder Energiesparmode in einen anderen Betriebs- oder Energiesparmode. Der Betriebsmodewechsel wird vorzugsweise von empfangenen Botschaften ausgelöst.

Das Modul 45 ist vorzugsweise aktiv, wenn sich der Mikroprozessors 30 in einem Betriebs - oder Energiesparmode befindet, in dem kein Sende- und/oder Empfangsbetrieb von Botschaften möglich ist und/oder keine Verarbeitung von Daten durchgeführt werden kann.

Das Modul 45 realisiert in einem solchen Betriebs- oder Energiesparmode des Mikroprozessors 30 den Sende- und/oder Empfangsbetrieb. In diesem Fall führt das Modul 45 als so genannter Ko-Prozessor Basisfunktionen des Mikroprozessors 30 aus, wobei Basisfunktionen vorab netzwerk- und steuergeräteabhängig festgelegt und konfiguriert sein können. Zum Senden von Botschaften ist der Mikroprozessor ausgangsseitig direkt datentechnisch mit dem Treiber 41 verbunden.

Das Modul 45 ermöglicht somit einen Zustand des Steuergeräts 21, in dem dieses quasi heruntergefahren ist (Zwischenzustand). Dieser Zwischenzustand ist gekennzeichnet durch einen reduzierten Energiebedarf und eine trotz ausgeschaltetem Mikroprozessor 30 mögliche Kommunikation. Hierbei wird eine Applikation nicht oder nur zeitweise ausgeführt. Zustands- oder Betriebsmodewechsel werden durch Botschaften bzw. in Botschaften codierte Fahr- oder Fahrzeugzustände ausgelöst. Es ist kein Master-Steuergerät zur Steuerung eines Zustands- oder Betriebsmodewechsel erforderlich. Ebenso ist kein Master-Steuergerät zur Aktivierung des Zwischenzustands erforderlich, dieser kann durch das Steuergerät 21 selbst aktiviert werden. Aus dem Zwischenzustand heraus kann in weitere Zustände oder Betriebsmodi gewechselt werden.

Das Modul 45 realisiert vorzugsweise jedoch ausschließlich einen Sende- und Empfangsbetrieb inklusive einer Auswertung von empfangenen Botschaften und Aktivierung eines Betriebsmodewechsels. In welchen Zustand oder Betriebsmode gewechselt wird, entscheidet die Applikation in Abhängigkeit der Umschaltursache.

Z.B. kann das Modul 45 gemäß Vorgaben eines Kommunikationsprotokolls des Netzwerks zyklisch Botschaften senden (z.B. für ein zyklisches Präsenzsignal). Somit kann weiteren Teilnehmern des Netzwerks beispielsweise angezeigt werden, dass das Steuergerät 21 trotz eines Energiesparmodus weiterhin kommunizierender Teilnehmer des Netzwerks ist.

Die aufgrund der Basisfunktionen vom Modul 45 zu sendenden Botschaften sind unabhängig von ihrer jeweiligen Funktion vom Mikroprozessor 30 frei konfigurierbar. Eine Konfiguration der Botschaften dient hierbei der Anpassung der von dem Modul 45 zu sendenden Botschaften an eine vorbestimmte Funktion der Botschaften (z.B. zyklisches Präsenzsignal). Eine Konfiguration von Botschaften findet vorzugsweise vor Aktivierung eines Energiesparmodus oder Sleep-Modus des Mikroprozessors 30 statt.

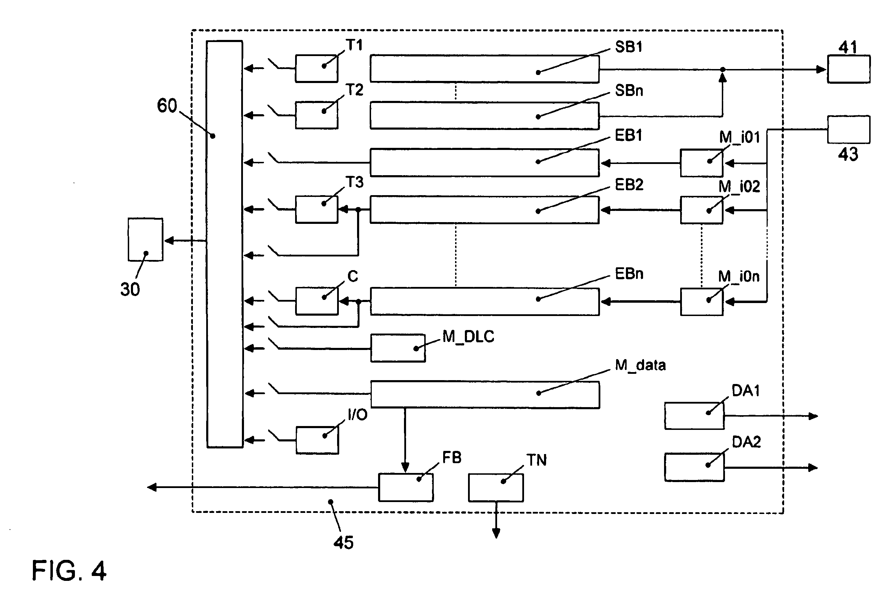

Das Modul 45 empfängt Botschaften, wertet Identifier und Dateninhalt bitgenau aus und ermittelt die Anzahl der Datenbytes. Des Weiteren können vorzugsweise alle Botschaften auf Timeout überwacht und/oder eine Anzahl von empfangenen Botschaften gezählt werden. Dies wird nachfolgend später erläutert (siehe z.B. Fig. 4).

Wie vorhergehend ausgeführt existieren verschiedene Kriterien gemäß derer das Modul 45 ein Schaltsignal für eine Änderung eines Betriebsmodus erzeugen kann. Die Kriterien können hierbei alternativ oder kumulativ ausgewertet werden.

Gemäß einem ersten Kriterium vergleicht das Modul 45 den Identifier mit einer Maske. Bei Übereinstimmung erzeugt das Modul 45 einen Betriebsmodewechsel des Mikroprozessors 30. Die Maske ist vom Mikroprozessor 30 frei konfigurierbar.

Gemäß einem zweiten Kriterium vergleicht das Modul 45 den Dateninhalt bitweise mit einer Maske. Bei Übereinstimmung mindestens eines vorbestimmten bzw. vordefinierten Bits erzeugt das Modul 45 einen Betriebsmodewechsel des Mikroprozessors 30. Die Maske ist vom Mikroprozessor 30 frei konfigurierbar.

Gemäß einem dritten Kriterium bestimmt das Modul 45, ob ein Dateninhalt größer als ein vorbestimmter Wert ist. Bei Erfüllung dieser Bedingung erzeugt das Modul 45 einen Betriebsmodewechsel des Mikroprozessors 30. Selbstverständlich kann das Modul 45 auch einen Betriebmodewechsel erzeugen, falls der Dateninhalt kleiner oder gleich dem vorbestimmten Wert ist. Der vorbestimmte Wert ist vom Mikroprozessor 30 frei konfigurierbar.

Gemäß einem vierten Kriterium vergleicht das Modul 45 die Anzahl der Datenbytes mit einer Maske. Ist die Anzahl kleiner als die der Maske, erzeugt das Modul 45 einen Betriebsmodewechsel des Mikroprozessors 30. Die Maske ist vom Mikroprozessor 30 frei konfigurierbar.

Gemäß einem fünften Kriterium überwacht das Modul 45 empfangene Botschaften auf Timeout. Wird ein Timeout erkannt, erzeugt das Modul 45 einen Betriebsmodewechsel des Mikroprozessors 30. Die Time-out-Bedingung (z.B. eine Zeitdauer für einen Time-Out) ist vom Mikroprozessor 30 frei konfigurierbar.

Gemäß einem sechsten Kriterium zählt das Modul 45 eine Anzahl von empfangenen Botschaften. Ist eine vorbestimmte Anzahl an Botschaften empfangen, erzeugt das Modul 45 einen Betriebsmodewechsel des Mikroprozessors 30. Der Zählerwert für empfangene Botschaften ist vom Mikroprozessor 30 frei konfigurierbar.

Weiter kann das Modul 45 einen zyklischen Betriebsmodewechsel des Mikroprozessors 30 nach Ablauf eines oder mehrerer Timer realisieren. Die Timer sind vom Mikroprozessor 30 frei konfigurierbar.

Weiter kann das Modul 45 die empfangenen Botschaften in einer Speichereinheit, vorzugsweise in einem FIFO Speicher, speichern. Der Mikroprozessor 30 kann auf den FIFO Speicher lesend und/oder löschend zugreifen.

Weiter kann das Modul 45 vorzugsweise über ein vom FIFO Speicher unabhängiges Datenregister verfügen, in dem eine empfangene Botschaft gespeichert wird, die ein oder mehrere der vorgenannten Kriterien einen Betriebsmodewechsel des Mikroprozessors 30 ausgelöst hat. Der Mikroprozessor 30 kann auf die gespeicherte Botschaft lesend und/oder löschend zugreifen.

Weiter kann das Modul 45 über, vorzugsweise digitale, Ausgänge zur Steuerung der Betriebsmodi des Transceivers 40 verfügen. Hierbei kann das Modul 45 z.B über den Steuerausgang Ctrl des Mikroprozessors 30 auf den Transceiver datentechnisch zugreifen oder zusätzliche Ausgänge aufweisen. Der Betriebsmode des Transceivers 40 kann entsprechend dem aktuellen Sende- oder Empfangsbetrieb des Moduls 45 angepasst und so eine weitere Reduktion benötigten Betriebsleistung erreicht werden. Sendet z.B. das Modul 45 keine Botschaften, schaltet das Modul 45 den Transceiver 40 vorzugsweise in einen Nur-Empfangsbetrieb (Listen only). Die digitalen Ausgänge sind vom Mikroprozessor 30 frei konfigurierbar.

Weiter kann das Modul 45 über, vorzugsweise digitale, Ausgänge zur Steuerung von nicht dargestellten externen Spannungsreglern für die Versorgung von Steuergeräteperipherie verfügen. Wechselt der Mikroprozessor 30 in einen Betriebsmode mit aktivem Modul 45, kann dieses Modul 45 z. B. nicht für den aktuellen Betriebsmode benötigte Steuergeräte einer Steuergeräteperipherie abschalten. Vorzugsweise bleiben Mikroprozessor 30, Transceiver 40 und die für den Betrieb notwendigen Teile der Steuergeräteperipherie weiterhin spannungsversorgt. Somit kann eine weitere Reduktion der benötigten Betriebsleistung erreicht werden. Die digitalen Ausgänge sind vom Mikroprozessor 30 frei konfigurierbar.

Weiter kann das Modul 45 über ein Statusregister verfügen, in dem das Modul 45 die Ursache für den Betriebsmodewechsel des Mikroprozessors 30 dokumentiert. Der Mikroprozessor 30 kann lesend auf das Statusregister zugreifen. Das Modul 45 kann bei einem solchen Zugriff aktiv oder passiv sein.

Weiter verfügt das Modul 45 vorzugsweise über ein Statusregister, in welchem der Mikroprozessors 30 die einen Betriebsmodewechsel auslösende Ursache (siehe oben) freigeben oder sperren kann. Somit kann festgelegt werden, welches Kriterium oder welche Kriterien für einen Wechsel des Betriebsmodes erfüllt sein müssen. Das Modul 45 kann bei einer Freischaltung/Sperrung aktiv oder passiv sein.

In Fig. 2c ist das Modul 45 ein separates Bauteil. Hierbei gelten zu der in Fig. 2b vorhergehend angeführten Erläuterungen analog. Hierbei ist das Modul 45 ausgangsseitig ebenfalls direkt datentechnisch mit dem Treiber 41 zum Senden von Botschaften verbunden.

Zur Konfiguration von Masken, digitalen Ausgängen, und vorbestimmten Werten der erläuterten Kriterien, zum Lesen/Schreiben von Statusregistern und zur weiteren datentechnischen Kommunikation ist der Mikroprozessor 30 hierbei über den Steuerausgang Ctrl datentechnisch mit dem Eingang des Moduls 45 verbunden. Hierbei ist die datentechnische Verbindung als bidirektionale Verbindung dargestellt. Selbstverständlich ist es auch möglich, dass das Steuergerät für die genannten Zwecke eine zusätzliche, vorzugsweise bidirektionale, Datenleitung von dem Mikroprozessor 30 zum Modul 45 aufweist.

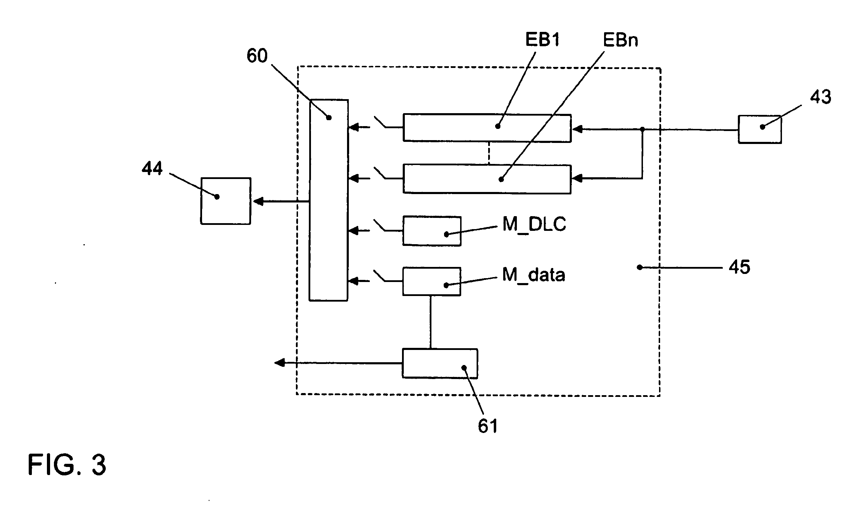

In Fig. 3 ist ein detailliertes schematisches Blockschaltbild eines Moduls 45 zur Netzwerk-Botschafts-Erkennung dargestellt. Das Modul 45 umfasst hierbei Empfangsbuffer EB1 bis Ebn. Die Empfangsbuffer EB1...EBn realisieren den Empfangsbetrieb von n möglichen Empfangsbotschaften. Hierbei ist jedem Empfangsbuffer EB1... EBn eine Empfangsbotschaft mit einem bestimmten Identifier (Standard oder Extended ID) zugeordnet. Die Empfangsbuffer sind hierbei eingangseitig datentechnisch mit dem in Fig. 2a dargestellten Receiver 43 verbunden. Wird eine Botschaft von dem Receiver 43 an das Modul 45 übertragen, so erfolgt ein Vergleich des Identifiers der Empfangsbotschaft mittels in Fig. 3 nicht dargestellten Identifier-Masken.

Weiter erfolgt ein Vergleich der Anzahl der Datenbytes mittels einer DLC-Maske M_DLC, was auch als DLC-Check bezeichnet werden kann. Weiter erfolgt ein Vergleich des Dateninhaltes der Empfangsbotschaft mit einer Daten-Maske M_data. Der Vergleich erfolgt hierbei bitweise auf gleiche Bits. In Fig. 3 sind schematisch nur jeweils eine DLC-Maske M_DLC und eine Daten-Maske M_data dargestellt, Selbstverständlich kann jedem Empfangsbuffer EB1... EBn jeweils eine solche Maske M_DLC, M_data zugeordnet sein.

Ausgangsseitig ist das Modul 45 mit der ebenfalls in Fig. 2a dargestellten Kontroll-Logik 44 datentechnisch verbunden. Ein Signal zur Betriebsmodeumschaltung erfolgt, wenn
- eine konfigurierte Botschaft, d.h. eine Botschaft mit vorbestimmten Identifier, empfangen wird oder
- eine konfigurierte Botschaft empfangen wird und die Anzahl der Datenbytes kleiner als die in der DLC-Maske M_DLC gespeicherte Anzahl ist oder
- eine konfigurierte Botschaft empfangen wird und ein Vergleich des Dateninhalts auf gleich mit der Daten-Maske M_data positiv ist.

Ein Vergleich der Anzahl von Datenbytes kann hierbei selbstverständlich auch auf größer oder gleich erfolgen.

Weiter umfasst das Modul 45 einen Oder-Block 60, der datentechnisch mit den Empfangsbuffern EB1...EBn und mit den Masken M_DLC, M_data verbunden ist, Hierbei kann die Datenverbindung zwischen dem Oder-Block und Empfangsbuffern EB1...EBn bzw. den Masken M_DLC, M_data konfiguriert werden, welches schematisch durch Schalter dargestellt ist.

Weiter umfasst das Modul 45 einen Buffer 61. In dem Buffer 61 wird eine einen Betriebsmodewechsel auslösende Empfangsbotschaft gespeichert und kann so später datentechnisch abgefragt werden.

In Fig. 4 ist ein detailliertes schematisches Blockschaltbild eines in einem Mikroprozessor integrierten (Fig. 2b) oder als separates Bauteil (Fig. 2c) ausgeführten Moduls 45 zur Netzwerk-Botschafts-Erkennung dargestellt.

Das Modul 45 umfasst hierbei n Sendebuffer SB1...SBn. Die Sendebuffer SB1...SBn realisieren einen Sendebetrieb von n Botschaften gemäß den Vorgaben eines Kommunikationsprotokolls des Netzwerkes. Hierbei sind die Sendebuffer SB1... SBn datentechnisch mit dem Treiber 41 des Tranceivers 40 verbunden (siehe auch Fig. 2b, Fig. 2c).

Die Sendebuffer SB1...SBn ermöglichen hierbei unter anderem ein zyklisches Senden von Sendebotschaften mit vorbestimmten Identifiern (Standard- oder Extended ID). Hierbei kann jedem Sendebuffer SB1... SBn z.B. eine bestimmte Sendebotschaft zugeordnet sein. Auch können Sendezeit, Identifier und Dateninhalt der Sendebotschaft frei konfigurierbar sein.

Weiter umfasst das Modul 45 n Empfangsbuffer EB1, EB2...EBn. Die Empfangsbuffer EB1, EB2... EBn realisieren den Empfangsbetrieb von n Botschaften, hierbei ist jedem Empfangsbuffer EB1... EBn eine Empfangsbotschaft mit einem bestimmten Identifier (Standard oder Extended ID) zugeordnet. Jedem Empfangsbuffer ist hierbei eine Identifier-Maske M_id1, M_id2... M_idn zugeordnet. Beim Empfang einer Botschaft über den Receiver 43 des Transceivers 40 (siehe Fig. 2b, Fig. 2c) erfolgt ein Vergleich des Identifiers der Empfangsbotschaft mittels der Identifier-Masken M_id1, M_id2... M_idn. Mittels der Identifier-Masken M_id1, M_id2...M_idn kann ein Identifier-Bereich an Empfangsbotschaften festgelegt werden, der mit einem bestimmten Empfangsbuffer EB1, EB2, ... EBn empfangen werden kann, z.B. ein Identifier-Bereich von Netzwerkmanagementbotschaften. Selbstverständlich kann die Anzahl von Sendebuffern SB1... SBn auch von einer Anzahl von Empfangsbuffern EB1...EBn unterschiedlich sein.

Weiter erfolgt ein Vergleich der Anzahl der Datenbyte mittels einer DLC-Maske M_DLC, was auch als DLC-Check bezeichnet werden kann. Weiter erfolgt ein Vergleich des Dateninhaltes der Empfangsbotschaft mit einer Daten-Maske M_data. In Fig. 4 sind schematisch nur jeweils eine DLC-Maske M_DLC und eine Daten-Maske M_data dargestellt. Selbstverständlich kann jedem Empfangsbuffer EB1... EBn jeweils eine solche Maske M_DLC, M_data zugeordnet sein.

Die Vergleiche können hierbei bitgenau auf gleich oder größer als oder kleiner als erfolgen.

Weiter umfasst das Modul einen ersten Time-Out-Timer T1 und einen zweiten Time-Out-Timer T2. Die Time-Out-Timer können hierbei von 0 bis zu einem vorbestimmten Time-Out-Wert (Hochzählen) oder von dem vorbestimmten Time-Out-Wert auf 0 zählen (Herunterzählen). Die Time-Out-Timer T1, T2 dienen hierbei als Timer für einen zyklischen Betriebsmodewechsel. Hierbei wird immer dann ein Betriebsmodewechsel ausgelöst, wenn einer oder beide der Time-Out-Timer T1, T2 den vorbestimmten Wert oder 0 erreicht haben. Selbstverständlich kann das Modul 45 noch weitere Timer umfassen, die nicht in Fig. 4 dargestellt sind.

Hierbei können die Time-Out-Timer T1, T2 und alle weiteren Time-Out-Timer auch als Zähler (Counter) verwendet werden, die eine Anzahl von vorbestimmten Ereignissen zählen.

Weiter umfasst das Modul 45 einen dritten Time-Out-Timer T3, der datentechnisch mit dem zweiten Empfangsbuffer EB2 verbunden ist. Der dritte Time-Out-Timer 3 wird auf einen vorbestimmten Wert (time out) gesetzt. Mit jedem Empfang einer Botschaft im zweiten Empfangsbuffer EB2 wird der dritte Time-Out-Timer T3 neu gestartet. Wird über die durch den vorbestimmten Wert repräsentierte Zeit (time out) keine Botschaft im zweiten Empfangsbuffer EB2 empfangen und der dritte Time-Out-Timer T3 nicht zurückgesetzt, läuft der dritte Time-Out-Timer T3 ab und löst einen Betriebsmodewechsel aus. Der dritte Time-Out-Timer T3 kann hierbei hoch- oder herunterzählen.

Alternativ kann der dritte Time-Out-Timer T3 auch als Zähler arbeiten und die Anzahl der im zweiten Empfangsbuffer EB2 empfangenen Empfangsbotschaften zählen. Eine solche Arbeitsweise ist für den n-ten Empfangsbuffer Ebn dargestellt, der datentechnisch mit einem Zähler C verbunden ist. Eine Betriebsmodeumschaltung erfolgt dann nach Empfang einer im Zähler C gespeicherten, vorbestimmten Anzahl von Botschaften im n-ten Empfangsbuffer EBn.

Weiter umfasst das Modul 45 einen freien Time-Out-Timer oder Zähler Tn. Dieser ist zur freien Verwendung für eine Steuergeräteperipherie vorgesehen. Der freie Time-Out-Timer Tn löst keinen Betriebsmodewechsel aus.

Weiter umfasst das Modul 45 einen FIFO-Buffer oder FIFO-Speicher FB. Hierbei können die in den Empfangsbuffern EB1, EB2... Ebn empfangenen Empfangsbotschaften im FIFO-Buffer FB gepuffert werden. Vorzugsweise erfolgt eine Pufferung von Empfangsbotschaften beim Übergang in einen anderen Betriebsmodus, wenn der Mikrokontroller 30 noch keinen Empfangsbetrieb ermöglicht. Der Applikation stehen damit zusätzlich zu der den Betriebsmodewechsel auslösenden Empfangsbotschaft weitere Verlaufsdaten zur Verfügung. Der FIFO-Buffer FB kann auch als Ringpuffer arbeiten. Hierbei kann der FIFO-Buffer FB n Empfangsbotschaften puffern. Einer der n Puffer oder Speicher des FIFO-Buffers FB speichert hierbei immer die den Betriebsmodewechsel auslösende Empfangsbotschaft und wird nicht überschrieben. Sollen keine weiteren Verlaufsdaten gespeichert werden, so kann der FIFO-Buffer FB auch eine Puffergröße aufweisen, die ausreicht, um nur die den Betriebsmodewechsel auslösende Empfangsbotschaft zu speichern.

Weiter umfasst das Modul 45 eine Ein- und Ausgabeschnittestelle (I/O-Pins) I/O. Vorzugsweise dient die Ein- und Ausgabeschnittstelle I/O als Eingang für Signale, die eine Betriebsmodewechsel auslösen können, z.B. als Eingang für mittels eines Schalters oder Tasters erzeugte Signale oder für von einem Fahr- oder Fahrzeugzustand abhängige Signale.

Insbesondere können mittels der Ein- und Ausgabeschnittstelle I/O von einem Fahr- oder Fahrzeugzustand abhängige Signale an das Modul 45 übertragen werden, welches dann den Mikroprozessor 30 nicht nur aufgrund von Empfangsbotschaften sondern auch auf Basis von Fahr- oder Fahrzeugzuständen ausschalten aber auch wieder einschalten kann, bzw. einen Betriebsmodus ändern kann.

So können z.B. über die Ein- und Ausgabeschnittstelle I/O Signale an das Modul 45 übermittelt werden, die z.B. von Schaltern/Tastern von Fensterhebern, einer Spiegelverstellung oder einer Zentralverriegelung erzeugt werden. Auch können so Signale einer externen Über- und Unterspannungsüberwachung einer Batteriespannung übermittelt werden. Weiter können so Signale an das Modul 45 übermittelt werden, die Fahrzeugzustände wie z.B. Zündung ein, Zündung aus, Rückwärtsfahrt, Crash, Öffnen der elektrischen Heckklappe, Ausfall von Leuchtmitteln u.a., repräsentieren. Das Modul 45 kann dann in Abhängigkeit der Signale einen Betriebsmodewechsel herbeiführen. Selbstverständlich kann auch eine nicht dargestellte Logik die von Fahrzeugzuständen abhängigen Signale verarbeiten und aus einem oder mehreren Signalen ein Steuersignal für das Modul 45 erzeugen.

Die vorhergehend geschilderte Funktionsweise soll anhand von zwei Beispielen erläutert werden:

In einem ersten Beispiel ist ein Steuergerät der Einparkhilfe abgeschaltet (Mikrokontroller 30 im Energiesparmode, Modul 45 aktiv). Das Fahrzeug stoppt aus Vorwärtsfahrt. Ein Kraftfahrzeugführer legt den Rückwärtsgang ein. Die Information "Rückwärtsgang eingelegt" wird mit einer Botschaft im Fahrzeugnetzwerk verteilt. Das Modul 45 der Einparkhilfe erkennt diese Botschaft und leitet den Betriebsmodewechsel des Mikrokontrollers 30 ein, so dass das Steuergerät Einparkhilfe seine Funktion erfüllen kann.

Des Weiteren kann das Modul 45 im abgeschalteten Zustand (Mikroprozessor 30 im Energiesparmode, Modul 45 aktiv) den Zustand "Zündung aus" erkennen und einen Betriebsmodewechsel einleiten, damit die Applikation das Steuergerät herunterfahren kann.

Alternativ zum Rückwärtsgang kann das Modul 45 die Fahrzeuggeschwindigkeit auswerten und bei Unterschreitung einer konfigurierten Geschwindigkeitsschwelle einen Betriebsmodewechsel herbeiführen.

Ein zweites Beispiel betrifft einen Ladevorgang von Hybrid- oder Elektrofahrzeugen. Hierbei sind nicht alle Steuergeräte eines Netzwerkes erforderlich. Mit Hilfe des Modul 45 kann ein sogenanntes selektives Wecken wie folgt realisiert werden, so dass nur die Steuergeräte eines Netzwerkes aktiv sind, die für den Ladevorgang benötigt werden.

Z.B werden beim Zustand "Zündung aus" und Steckung des Ladesteckers Steuergeräte des Netzwerks geweckt. Die beim Zustand "Zündung aus" weckfähigen Steuergeräte des Netzwerkes werden somit eingeschaltet. Die Applikation prüft, ob das Steuergerät benötigt wird. Wenn nicht, wird dieses in einen Betriebsmode mit aktivem Modul 45 versetzt, wobei ein Mikroprozessors des Steuergeräts in einem Sleep-Mode bleibt. Die Information über die Beendigung des Ladevorganges, z.B. "Ladeschlussspannung erreicht" oder "Stecker gezogen", wird von einem Steuergerät im Netzwerk verteilt und vom Modul 45 erkannt. Das Netzwerk kann heruntergefahren werden, oder ein Steuergerät wird selektiv geweckt, um z.B. den Ladezustand anzuzeigen oder das Fahrzeug zu klimatisieren.

Weiter umfasst das Modul 45 eine erste digitale Ausgangsschnittstelle DA1 zur Ausgabe von Signalen zur externen Spannungsreglern. Mittels der ersten digitalen Ausgangsschnittstelle DA1 können z.B. Signale zur Abschaltung von externen Spannungsreglern der Steuergeräteperipherie, wie z.B. für Leistungstreiber, vom Modul 45 an diese datentechnisch übertragen werden.

Weiter umfasst das Modul 45 eine zweite digitale Ausgangsschnittstellen DA2 zur Ausgabe von Signalen zum Transceiver 40 (siehe Fig. 2b, 2c). Mittels der zweiten digitalen Ausgangsschnittstelle DA2 können z.B. zur Steuerung der Betriebsmodi des Transceivers 40 vom Modul 45 an diesen datentechnisch übertragen werden.

Ausgangsseitig ist das Modul 45 mit dem ebenfalls in den Fig. 2b und Fig. 2c dargestellten Mikroprozessor 30 datentechnisch verbunden. Hierbei umfasst der Begriff Verbindung auch die Integration des Moduls 45 in den Mikroprozessor 30. Ein Signal zur Betriebsmodeumschaltung erfolgt, wenn
- eine konfigurierte Botschaft, d.h. eine Botschaft mit vorbestimmten Identifier, empfangen wird oder
- eine konfigurierte Botschaft über eine vorbestimmte Zeit (Time-Out) nicht empfangen wird oder
- eine konfigurierte Botschaft empfangen wird und die Anzahl der Datenbyte kleiner als die in der DLC-Maske M_DLC gespeicherte Anzahl ist oder
- eine konfigurierte Botschaft empfangen wird und eine Vergleich des Dateninhalts auf gleich oder größer als oder kleiner als mit der Daten-Maske M_data positiv ist oder
- ein Time-Out-Timer T1, T2 den vorbestimmten Wert oder den Wert 0 erreicht oder
- eine vorbestimmte Anzahl von Empfangsbotschaften empfangen wurde oder
- ein externes Signal mittels der Ein- und Ausgabeschnittstelle IO an das Modul 45 übermittelt wurde.

Hierzu umfasst das Modul 45 einen Oder-Block 60, der datentechnisch mit den Empfangsbuffern EB1, EB2, ... EBn verbunden ist. Weiter ist der Oder-Block 60 mit den Masken M_DLC, M_data, mit den Time-Out-Timern T1, T2, dem dritten Time-Out-Timer T3, dem Zähler C und der Ein- und Ausgabeschnittstellen I/O datentechnisch verbunden. Hierbei können Datenverbindungen zwischen dem Oder-Block 60 und den vorhergehenden angeführten Elementen konfiguriert werden, welches schematisch durch Schalter dargestellt ist.

## Patentansprüche

1. Steuergerät (21) für ein Fahrzeugnetzwerk, wobei das Steuergerät (21) einen Mikroprozessor (30) und einen Transceiver (40) umfasst,
**dadurch gekennzeichnet, dass**
das Steuergerät (21) bei einem vorab definierten Zustand während des Betriebes des Kraftfahrzeuges ausschaltbar oder in einen Sleep-Modus schaltbar ist und/oder das Steuergerät (21) bei einem vorab definierten Zustand während des Betriebes aus dem Sleep-Modus aufweckbar ist, wobei das Steuergerät (21) ein Modul (45) zur Netzwerk-Botschafts-Erkennung umfasst, das das Einschalten und/oder den Sleep-Modus und/oder das Ausschalten steuert, wobei der Zustand zur Schaltung des Steuergeräts (21) in den Sleep-Modus oder zum Ausschalten oder zum Aufwecken über eine Netzwerk-Botschaft übermittelt wird.

2. Steuergerät nach Anspruch 1, **dadurch gekennzeichnet, dass** das Steuergerät (21) bei einem vorab definierten Ereignis während des Betriebes des Kraftfahrzeuges ausschaltbar oder in einen Sleep-Modus schaltbar ist und/oder das Steuergerät (21) bei einem vorab definierten Ereignis während des Betriebes aus dem Sleep-Modus aufweckbar ist.

3. Steuergerät nach Anspruch 2, **dadurch gekennzeichnet, dass** das Ereignis zur Schaltung des Steuergerätes (21) in den Sleep-Modus oder zum Ausschalten oder zum Aufwecken mindestens eine Netzwerk-Botschaft ist.

4. Steuergerät nach einem der vorangegangenen Ansprüche, **dadurch gekennzeichnet, dass** das Modul (45) eingangsseitig mit dem Ausgang eines Receivers (43) des Transceivers (40) verbunden ist und ausgangsseitig mit einer Steuerlogik (44) des Transceivers (40) oder ausgangsseitig mit einer Steuerlogik (44) und einen Treiber (41) des Transceivers (40) oder ausgangsseitig mit dem Mikroprozessor (30) und einem Treiber (41) des Transceivers (40) verbunden ist.

5. Steuergerät nach einem der vorangegangenen Ansprüche, **dadurch gekennzeichnet, dass** das Modul (45) in dem Transceiver (40) oder in dem Mikroprozessor (30) integriert ist oder als separates Bauteil ausgebildet ist.

6. Steuergerät nach Anspruch 5, **dadurch gekennzeichnet, dass** das Modul (45) in den Mikroprozessor (30) integriert ist und mittels des Moduls (45) eine Koprozessor-Funktion des Mikroprozessors (30) ausführbar ist, falls ein Sleep-Modus des Mikroprozessors (30) aktiviert ist, wobei das Modul (45) in der Koprozessor-Funktion mindestens einen Sendebetrieb und Empfangsbetrieb durchführt.

7. Steuergerät nach einem der vorangegangenen Ansprüche, **dadurch gekennzeichnet, dass** das Modul (45) mindestens eine Daten-Maske (M_data) und mindestens eine DLC-Maske (M_DLC) und mindestens eine Identifier-Maske (M_id1, M_id2, M_idn) umfasst.

8. Steuergerät nach einem der vorangegangenen Ansprüche, **dadurch gekennzeichnet, dass** das Modul (45) mindestens eine Ein- und Ausgabeschnittstelle (I/O) umfasst, wobei mittels der Ein- und Ausgabeschnittstelle (I/O) externe Signale empfangbar und/oder sendbar sind.

9. Steuergerät nach einem der vorangegangenen Ansprüche, **dadurch gekennzeichnet, dass** das Modul (45) mindestens eine Ausgangsschnittstelle (DA1) zur Ausgabe von Signalen zu externen Spannungsreglern und/oder mindestens eine Ausgangsschnittstelle (DA2) zur Ausgabe von Signalen zur Steuerung des Transceivers (40) umfasst.

10. Steuergerät nach einem der vorangegangenen Ansprüche, **dadurch gekennzeichnet, dass** das Modul (45) mindestens einen Time-Out-Timer (T1, T2, T3) umfasst, wobei mittels des Moduls (45) ein Betriebsmode umschaltbar ist, falls der Time-Out-Timer (T1, T2, T3) einen vorbestimmten Wert oder 0 erreichen.

11. Steuergerät nach einem der vorangegangenen Ansprüche, **dadurch gekennzeichnet, dass** das Modul (45) mindestens einen Zähler (C) umfasst, wobei mittels des Moduls (45) ein Betriebsmode umschaltbar ist, falls der Zähler (C) einen vorbestimmten Wert erreicht.

12. Steuergerät nach einem der vorangegangenen Ansprüche, **dadurch gekennzeichnet, dass** das Modul (45) mindestens einen Empfangsbuffer (EB1, EB2, EBn) und/oder mindestens einen Sendebuffer (SB1, SBn) umfasst, wobei mittels des Empfangsbuffers (EB1, EB2, EBn) Botschaften empfangbar und/oder mittels des Sendebuffers (SB1, SBn) Botschaften sendbar sind.

13. Verfahren zum Betreiben eines Fahrzeugnetzwerkes, wobei das Fahrzeugnetzwerk mehrere Steuergeräte umfasst, die jeweils einen Mikroprozessor und einen Transceiver umfassen,
**dadurch gekennzeichnet, dass**
mindestens ein Steuergerät (21) bei einem vorab definierten Zustand während des Betriebes des Kraftfahrzeuges ausgeschaltet oder in einen Sleep-Modus geschaltet wird und/oder ein Steuergerät (21) bei einem vorab definierten Zustand während des Betriebes aus dem Sleep-Modus aufgeweckt wird, wobei das Steuergerät (21) ein Modul (45) zur Netzwerk-Botschafts-Erkennung umfasst, das das Einschalten und/oder den Sleep-Modus und/oder das Ausschalten steuert, wobei der Zustand zu Schaltung des Steuergeräts (21) in den Sleep-Modus oder zum Ausschalten oder zum Aufwecken über eine Netzwerk-Botschaft übermittelt wird.

14. Verfahren nach Anspruch 13, **dadurch gekennzeichnet, dass** ein Master-Steuergerät (4) als Ereignis eine Netzwerk-Botschaft übermittelt, in deren Abhängigkeit mindestens ein Steuergerät (21) ausgeschaltet oder in den Sleep-Modus geschaltet oder aufgeweckt wird.

15. Verfahren nach einem der Ansprüche 13 oder 14, **dadurch gekennzeichnet, dass** der vorab definierte Zustand die Kraftfahrzeuggeschwindigkeit V ist, wobei bei einer Kraftfahrzeuggeschwindigkeit V größer einer Grenzgeschwindigkeit V_{grenz} mindestens ein Steuergerät (21) ausgeschaltet oder in den Sleep-Modus geschaltet oder aufgeweckt wird.

## Claims

1. Controller (21) for a vehicle network, wherein the controller (21) comprises a microprocessor (30) and a transceiver (40),
**characterized in that**
the controller (21) can be switched off or switched to a sleep mode for a previously defined state during the operation of the motor vehicle and/or the controller (21) can be woken from the sleep mode for a previously defined state during the operation, wherein the controller (21) comprises a module (45) for network message identification that controls the switching-on and/or the sleep mode and/or the switching-off, wherein the state for switching the controller (21) to the sleep mode or for switching off or for waking is transmitted by means of a network message.

2. Controller according to Claim 1, **characterized in that** the controller (21) can be switched off or switched to a sleep mode for a previously defined event during the operation of the motor vehicle and/or the controller (21) can be woken from the sleep mode for a previously defined event during the operation.

3. Controller according to Claim 2, **characterized in that** the event for switching the controller (21) to the sleep mode or for switching off or for waking is at least one network message.

4. Controller according to one of the preceding claims, **characterized in that** the module (45) has its input side connected to the output of a receiver (43) in the transceiver (40) and has its output side connected to a control logic unit (44) in the transceiver (40) or has its output side connected to a control logic unit (44) and a driver (41) in the transceiver (40) or has its output side connected to the microprocessor (30) and a driver (41) in the transceiver (40).

5. Controller according to one of the preceding claims, **characterized in that** the module (45) is integrated in the transceiver (40) or in the microprocessor (30) or is in the form of a separate component.

6. Controller according to Claim 5, **characterized in that** the module (45) is integrated in the microprocessor (30) and the module (45) can be used to perform a coprocessor function of the microprocessor (30) if a sleep mode of the microprocessor (30) has been activated, wherein the module (45) carries out at least one transmission mode and reception mode in the coprocessor function.

7. Controller according to one of the preceding claims, **characterized in that** the module (45) comprises at least one data mask (M_data) and at least one DLC mask (M_DLC) and at least one identifier mask (M_id1, M_id2, M_idn).

8. Controller according to one of the preceding claims, **characterized in that** the module (45) comprises at least one input and output interface (I/O), wherein the input and output interface (I/O) can be used to receive and/or send external signals.

9. Controller according to one of the preceding claims, **characterized in that** the module (45) comprises at least one output interface (DA1) for outputting signals to external voltage regulators and/or at least one output interface (DA2) for outputting signals for controlling the transceiver (40).

10. Controller according to one of the preceding claims, **characterized in that** the module (45) comprises at least one time-out timer (T1, T2, T3), wherein the module (45) can be used to change over a mode of operation if the time-out timer (T1, T2, T3) reaches a predetermined value or zero.

11. Controller according to one of the preceding claims, **characterized in that** the module (45) comprises at least one counter (C), wherein the module (45) can be used to change over a mode of operation if the counter (C) reaches a predetermined value.

12. Controller according to one of the preceding claims, **characterized in that** the module (45) comprises at least one reception buffer (EB1, EB2, EBn) and/or at least one transmission buffer (SB1, SBn), wherein the reception buffer (EB1, EB2, EBn) can be used to receive messages and/or the transmission buffer (SB1, SBn) can be used to send messages.

13. Method for operating a vehicle network, wherein the vehicle network comprises a plurality of controllers which each comprise a microprocessor and a transceiver,
**characterized in that**
at least one controller (21) is switched off or switched to a sleep mode for a previously defined state during the operation of the motor vehicle and/or a controller (21) is woken from the sleep mode for a previously defined state during the operation, wherein the controller (21) comprises a module (45) for network message identification that controls the switching-on and/or the sleep mode and/or the switching-off, wherein the state for switching the controller (21) to the sleep mode or for switching off or for waking is transmitted by means of a network message.

14. Method according to Claim 13, **characterized in that** a master controller (4) transmits as an event a network message on the basis of which at least one controller (21) is switched off or switched to the sleep mode or woken.

15. Method according to either of Claims 13 and 14, **characterized in that** the previously defined state is the motor vehicle speed V, wherein at least one controller (21) is switched off or switched to the sleep mode or woken for a motor vehicle speed V greater than a limit speed Vₗᵢₘᵢₜ.

## Revendications

1. Appareil de commande (21) destiné à un réseau de véhicule, dans lequel l'appareil de commande (21) comprend un microprocesseur (30) et un émetteur-récepteur (40),
**caractérisé en ce que** l'appareil de commande (21) peut être désactivé ou être mis dans un état de veille lors d'un état défini à l'avance pendant le fonctionnement du véhicule à moteur et/ou **en ce que** l'appareil de commande (21) peut être sorti du mode de veille lors d'un état défini à l'avance pendant le fonctionnement, dans lequel l'appareil de commande (21) comprend un module (45) destiné à détecter des messages de réseau qui commande l'activation et/ou le mode de veille et/ou la désactivation, l'état conduisant au passage de l'appareil de commande (21) en mode de veille ou à le désactiver ou à l'éveiller étant transmis par l'intermédiaire d'un message de réseau.

2. Appareil de commande selon la revendication 1, **caractérisé en ce que** l'appareil de commande (21) peut être désactivé ou mis dans un état de veille lors d'un événement défini à l'avance pendant le fonctionnement du véhicule à moteur et/ou **en ce que** l'appareil de commande (21) peut être sorti du mode de veille lors d'un événement défini à l'avance pendant le fonctionnement.

3. Appareil de commande selon la revendication 2, **caractérisé en ce que** l'événement destiné à faire passer l'appareil de commande (21) dans le mode de veille ou à le désactiver ou à l'éveiller est au moins un message de réseau.

4. Appareil de commande selon l'une quelconque des revendications précédentes, **caractérisé en ce que** le module (45) est connecté, du côté de l'entrée, à une sortie d'un récepteur (43) de l'émetteur-récepteur (40) et est connecté, du côté de la sortie, à une logique de commande (44) de l'émetteur-récepteur (40), ou est connecté, du côté de la sortie, à une logique de commande (44) et à un circuit d'attaque (41) de l'émetteur-récepteur (40) ou est connecté, du côté de la sortie, au microprocesseur (30) et à un circuit d'attaque (41) de l'émetteur-récepteur (40).

5. Appareil de commande selon l'une quelconque des revendications précédentes, **caractérisé en ce que** le module (45) est intégré à l'émetteur-récepteur (40) ou au microprocesseur (30) ou est réalisé sous la forme d'un composant séparé.

6. Appareil de commande selon la revendication 5, **caractérisé en ce que** le module (45) est intégré au microprocesseur (30) et **en ce qu'**une fonction de coprocesseur du microprocesseur (30) peut être réalisée au moyen du module (45) dans le cas où un mode de veille du microprocesseur (30) est activé, le module (45) exécutant au moins une opération d'émission et une opération de réception dans la fonction de coprocesseur.

7. Appareil de commande selon l'une quelconque des revendications précédentes, **caractérisé en ce que** le module (45) comprend au moins un masque de données (M_data) et au moins un masque DLC (M_DLC) et au moins un masque d'identifiant (M_id1, M_id2, M_idn).

8. Appareil de commande selon l'une quelconque des revendications précédentes, **caractérisé en ce que** le module (45) comprend au moins une interface d'entrée et de sortie (I/O), des signaux externes pouvant être reçus et/ou émis au moyen de l'interface d'entrée et de sortie (I/O).

9. Appareil de commande selon l'une quelconque des revendications précédentes, **caractérisé en ce que** le module (45) comprend au moins une interface de sortie (DA1) destinée à délivrer des signaux à des régulateurs de tension externes et/ou au moins une interface de sortie (DA2) destinée à délivrer des signaux pour commander l'émetteur-récepteur (40).

10. Appareil de commande selon l'une quelconque des revendications précédentes, **caractérisé en ce que** le module (45) comprend au moins un temporisateur (T1, T2, T3), un mode de fonctionnement pouvant être activé au moyen du module (45) dans le cas où le temporisateur (T1, T2, T3) atteint une valeur prédéterminée ou 0.

11. Appareil de commande selon l'une quelconque des revendications précédentes, **caractérisé en ce que** le module (45) comprend au moins un compteur (C), un mode de fonctionnement pouvant être activé au moyen du module (45) dans le cas où le compteur (C) atteint une valeur prédéterminée.

12. Appareil de commande selon l'une quelconque des revendications précédentes, **caractérisé en ce que** le module (45) comprend au moins un tampon de réception (EB1, EB2, EBn) et/ou au moins un tampon d'émission (SB1, SBn), des messages pouvant être reçus au moyen du tampon de réception (EB1, EB2, EBn) et/ou des messages pouvant être émis au moyen du tampon d'émission (SB1, SBn).

13. Procédé de mise en fonctionnement d'un réseau de véhicule, dans lequel le réseau de véhicule comprend une pluralité d'appareils de commande qui comprennent respectivement un microprocesseur et un émetteur-récepteur,
**caractérisé en ce qu'**au moins un appareil de commande (21) est désactivé dans un état défini à l'avance pendant le fonctionnement du véhicule à moteur ou est mis dans un état de veille et/ou un appareil de commande (21) est sorti du mode de veille dans un état défini à l'avance pendant le fonctionnement, l'appareil de commande (21) comprenant un module (45) destiné à détecter des messages de réseau qui commande l'activation et/ou le mode de veille et/ou la désactivation, l'état conduisant au passage de l'appareil de commande (21) en mode de veille ou à le désactiver ou à l'éveiller étant transmis par l'intermédiaire d'un message de réseau.

14. Procédé selon la revendication 13, **caractérisé en ce qu'**un appareil de commande maître (4) transmet en tant qu'événement un message de réseau en fonction duquel au moins un appareil de commande (21) est désactivé ou est mis dans un état de veille ou est sorti du mode de veille.

15. Procédé de commande selon l'une quelconque des revendications 13 ou 14, **caractérisé en ce que** l'état défini à l'avance est la vitesse V du véhicule à moteur, dans lequel au moins un appareil de commande (21) est désactivé ou est mis en mode de veille ou est sorti du mode de veille lorsque la vitesse V du véhicule à moteur est supérieure à une vitesse limite Vₗᵢₘᵢₜₑ.
